Europäisches Patentamt

European Patent Office

Office européen des brevets

(19)

(11) Veröffentlichungsnummer: **0 081 190**
**B1**

(12) **EUROPÄISCHE PATENTSCHRIFT**

(45) Veröffentlichungstag der Patentschrift:
01.04.87

(21) Anmeldenummer: 82111075.6

(22) Anmeldetag: 01.12.82

(51) Int. Cl.⁴: **B 62 D 53/06,** B 60 D 1/00,
B 62 D 53/08, B 62 D 37/00,
A 01 G 23/00, A 01 D 75/18

(54) **Fahrzeuganhänger mit seitlich wegschwenkbarer Zugkupplung.**

(30) Priorität: **04.12.81 DE 3148041**

(43) Veröffentlichungstag der Anmeldung:
**15.06.83 Patentblatt 83/24**

(45) Bekanntmachung des Hinweises auf die Patenterteilung:
**01.04.87 Patentblatt 87/14**

(84) Benannte Vertragsstaaten:
**AT BE CH FR GB IT LI LU NL SE**

(56) Entgegenhaltungen:
**DE - A - 1 803 769
DE - U - 1 962 385
US - A - 3 556 582
US - A - 3 666 121
US - A - 4 200 315**

**Die Akte enthält technische Angaben, die nach dem
Eingang der Anmeldung eingereicht wurden und die
nicht in dieser Patentschrift enthalten sind.**

(73) Patentinhaber: **Ruf, Hans, Tussenhausener Strasse 67,
D-8939 Zaisertshofen (DE)**

(72) Erfinder: **Ruf, Hans, Tussenhausener Strasse 67,
D-8939 Zaisertshofen (DE)**

(74) Vertreter: **Pfister, Helmut, Dipl.-Ing., Buxacher Strasse 9,
D-8940 Memmingen/Bayern (DE)**

ACTORUM AG

## Beschreibung

Die Erfindung betrifft einen Fahrzeuganhänger für Ladearbeiten, insbesondere zum Abtransport von Rundholz aus Waldungen, wobei der Fahrzeugrahmen des Anhängers eine Anhängekupplung für ein Schleppfahrzeug aufweist, eine Achsanordnung etwa unter der Ladefläche, sowie ein Ladegerät am vorderen Ende der Ladefläche und sich das Ladegerät bei der Ladearbeit über die Anhängekupplung auch auf das Schleppfahrzeug abstützt, und mit einer Vorrichtung zur Verringerung der Kippgefahr während der Ladearbeit.

Es sind Fahrzeuge der vorstehend beschriebenen Art bekannt, die dazu dienen, beispielsweise Rundholz aufzuladen und aus Waldungen abzutransportieren. Die Fahrzeuganhänger sind mit einer Ladeeinrichtung, die vorzugsweise hydraulisch angetrieben ist, ausgerüstet und mittels der Ladeeinrichtung können die Baumstämme bzw. die abgelängten Rundhölzer erfasst, an den Anhänger herangezogen und auf die Ladefläche aufgeladen werden.

Im allgemeinen sind solche Fahrzeuganhänger nur mit einer einzigen Achse bzw. einer Tandemachse ausgerüstet, so dass sich im wesentlichen eine Abstützung des Fahrzeugrahmens auf drei Punkten ergibt, und zwar auf den beiden Rädern der Achse und auf der Anhängekupplung. Bei den Ladearbeiten ergibt sich nun, dass insbesondere dann, wenn der Anhänger noch unbeladen oder nur geringfügig beladen ist, der Anhänger leicht zum Kippen neigt. Die Verwendung zusätzlicher Stützfüsse zur Vermeidung des Kippens ist umständlich und zeitraubend und befriedigt bei weichem Untergrund oft nicht. Dabei muss beachtet werden, dass gerade für Waldarbeiten häufig ein Ortswechsel notwendig ist.

In der US-A 4 200 315 ist ein Fahrzeuganhänger mit einem Schleppfahrzeug der eingangs beschriebenen Gattung beschrieben, wobei zur Verringerung der Kippgefahr eine spezielle Kupplung zwischen dem Schleppfahrzeug und dem Anhänger angewandt wird. Wenn zur Ladearbeit das Schleppfahrzeug zum Anhänger eine Winkelstellung einnimmt, kann die Kupplung die Kippmomente auf das Schleppfahrzeug übertragen. Das Gewicht und die Standfläche des Schleppfahrzeuges wirken dann dem Kippen entgegen.

Von Nachteil bei dieser Bauweise ist, dass das Schleppfahrzeug als Raupenfahrzeug auszubilden ist, weil es nur dann bei beengten Platzverhältnissen möglich ist, das Schleppfahrzeug winklig zum Anhänger auszurichten. Die speziell ausgebildete Anhängekupplung verhindert auch eine beliebige Kombination des Schleppfahrzeugs oder des Anhängers mit anderen Fahrzeugen.

Es ist Aufgabe der Erfindung, an einem Fahrzeuganhänger der eingangs beschriebenen Gattung eine Anordnung zu treffen, die es ebenfalls ermöglicht, das Kippen ganz oder doch weitestgehend zu vermeiden, wobei jedoch eine Kupplung herkömmlicher Bauweise beibehalten bleiben soll, so dass es möglich ist, beliebige Fahrzeuge miteinander zu kombinieren.

Zur Lösung dieser Aufgabe geht die Erfindung aus von einem Fahrzeuganhänger der eingangs beschriebenen Art und schlägt eine Verstelleinrichtung zur Verstellung der Anhängekupplung gegenüber dem Fahrzeugrahmen des Anhängers horizontal und rechtwinklig zur Fahrtrichtung vor.

Durch die Erfindung ergibt sich eine überraschend einfache Lösung des Problems. Durch eine Verstellung der Anhängekupplung des Anhängers horizontal und rechtwinklig zur Fahrtrichtung ergibt sich eine wesentliche Verbesserung der Kippsicherheit. Es wird eine wesentlich günstigere Begrenzung der Standfläche des Anhängers erhalten als bei den bisherigen Anordnungen. Dabei ist es nicht notwendig, das Schleppfahrzeug selbst zu verändern bzw. als Raupenschlepper auszubilden. Es kann beispielsweise ein wesentlich billigeres Radfahrzeug als Schleppfahrzeug Verwendung finden.

Bei der Erfindung ist es auch nicht notwendig, zur Erreichung der besseren Kippsicherheit von der vorhandenen Fahrspur abzuweichen. Dies ist dann besonders günstig, wenn die Platzverhältnisse sehr beengt sind, wie dies bei Waldarbeiten üblich ist.

Wenn bei der Erfindung die Anhängekupplung verstellt wird, entfernt sich das Ladegerät von der Lastaufnahmestelle. Dabei ist es durchaus möglich bzw. erwünscht, dass das Ladegerät bei diesem Verstellvorgang in den Bereich ausserhalb der Abstützfläche gelangt. Das Gewicht des Ladegerätes und der entsprechenden Teile des Fahrzeugrahmens wirkt dadurch dem Kippvorgang entgegen.

Es ist klar, dass bei der Anwendung der Erfindung das Ladegerät an sich vom Lastaufnahmepunkt entfernt wird. Dies ist aber ohne weitere Bedeutung. Es ist durchaus möglich, das Schleppfahrzeug und den Anhänger bezüglich des Lastaufnahmepunktes so anzuordnen, dass die erwähnte Vergrösserung des Abstandes zum Lastaufnahmepunkt ohne Nachteil ist. Andererseits kann die Last zuerst mittels des Ladegerätes an den Fahrzeuganhänger herangezogen und erst in der Nähe des Anhängers aufgenommen werden, so dass im Augenblick der Lastaufnahme die gegenseitige Zuordnung des Ladegerätes und der Last unverändert bleibt.

Von besonderem Vorteil ist bei der Erfindung, dass die Verstellung der Anhängekupplung gemäss der Erfindung unabhängig vom jeweiligen Untergrund möglich ist. Ein nachgiebiger, weicher Untergrund behindert daher den Ladevorgang nicht. Die Räder des Anhängers bzw. des Schleppfahrzeugs neigen auch weniger zum Einsinken bei weichem Untergrund, da deren Abstützfläche in der Regel verhältnismässig gross ist.

Für die Erfindung ergibt sich weiter der Vorteil, dass während der Fahrt des Schleppfahrzeugs mit dem Anhänger die Verstelleinrichtung ebenfalls betätigt werden kann. Bei starken Seitenneigungen der Fahrbahn, bei denen das angehängte Fahrzeug abzurutschen neigt, ist es daher möglich, auf den Anhänger so einzuwirken, dass dieser in die Fahrspur zurückkehrt.

Bei landwirtschaftlichen Fahrzeugen, nämlich bei Ladewagen ist es bekannt, die Zugkupplung seitlich wegzuschwenken um zu erreichen, dass der Ladewagen in einer anderen Spur fährt, als beispielsweise das mähende Schleppfahrzeug. Die vorteilhaften Veränderungen der Unterstützungsfläche ergeben sich hierbei nicht.

In der DE-U 19 62 385 ist eine Zugdeichselanordnung bei Einachs-Anhängern beschrieben, bei der die Zugdeichsel nach dem Abkuppeln seitlich wegschwenkbar ist, um hierdurch die Ladefläche des Einachsanhängers auch von vorne zugänglich zu machen. Ein derartiger Einachsanhänger dient jedoch ganz anderen Zwecken, als der Fahrzeuganhänger gemäss der Erfindung. Durch das Wegschwenken der Zugdeichsel des abgekuppelten Fahrzeuges werden auch nicht andeutungsweise die Schwerpunktsveränderungen erhalten, die sich die Erfindung zunutze macht.

In weiterer Ausbildung der Erfindung ist vorgesehen, dass die Verstelleinrichtung hydraulisch angetrieben ist. An sich ist auch eine mechanische Verstellung möglich. Die hydraulische Verstelleinrichtung ist jedoch zu bevorzugen.

Bei einem bewährten Ausführungsbeispiel der Erfindung besteht die Verstelleinrichtung im wesentlichen aus einem Lenkerparallelogramm, wobei die horizontal angeordneten Lenker mit ihrem einen Ende am Fahrzeugrahmen gelagert und mit dem anderen Ende durch ein Querstück verbunden sind, das die Anhängekupplung trägt.

Der Arbeitszylinder für die Verstelleinrichtung ist vorzugsweise zwischen den Lenkern des Lenkerparallelogramms angeordnet.

Um zu vermeiden, dass durch die Anordnung einer Verstelleinrichtung eine nicht nutzbare Vergrösserung der Baulänge des Anhängers erhalten wird, schlägt die Erfindung vor, dass die Verstelleinrichtung und insbesondere das Lenkerparallelogramm unter dem Ladegerät angeordnet ist.

In der Zeichnung ist ein Ausführungsbeispiel der Erfindung schematisch dargestellt. Es zeigen:

Fig. 1 eine Seitenansicht eines erfindungsgemässen Fahrzeuganhängers und

Fig. 2 eine Draufsicht auf ein Ausführungsbeispiel nach der Fig. 1.

Der Fahrzeugrahmen 4 stützt sich über die Tandemachse 9 auf dem Erdboden 10 ab. An dem in Fahrtrichtung vorderen Ende ist die Anhängekupplung 6 zur Verbindung mit einem nicht dargestellten Schleppfahrzeug vorgesehen.

Auf dem Fahrzeugrahmen 4 ist eine Ladefläche 11 üblicher Ausbildung vorgesehen, wie diese z.B. geeignet ist, Rundholz aufzunehmen.

Zwischen der Ladefläche 11 und der Anhängekupplung 6 stützt sich auf dem Fahrzeugrahmen das Ladegerät 8 ab, das eine an sich bekannte Ausbildung aufweist und beispielsweise um die senkrechte Drehachse 12 verschwenkbar ist. Mit dem Greifer 13 kann das Rundholz seitlich des Fahrzeuges erfasst und auf die Ladefläche 11 gesetzt werden.

Zwischen dem vorderen Ende des Fahrzeugrahmens 4 und der Anhängekupplung 6 erstreckt sich die Verstelleinrichtung 1, die im gezeigten Ausführungsbeispiel aus den beiden Lenkern 2 und 3 besteht, die jeweils bei 14 am Fahrzeugrahmen angelenkt sind und an ihrem anderen Ende durch das Querstück 5 verbunden sind. Die Anhängekupplung 6 ist am Querstück gelagert.

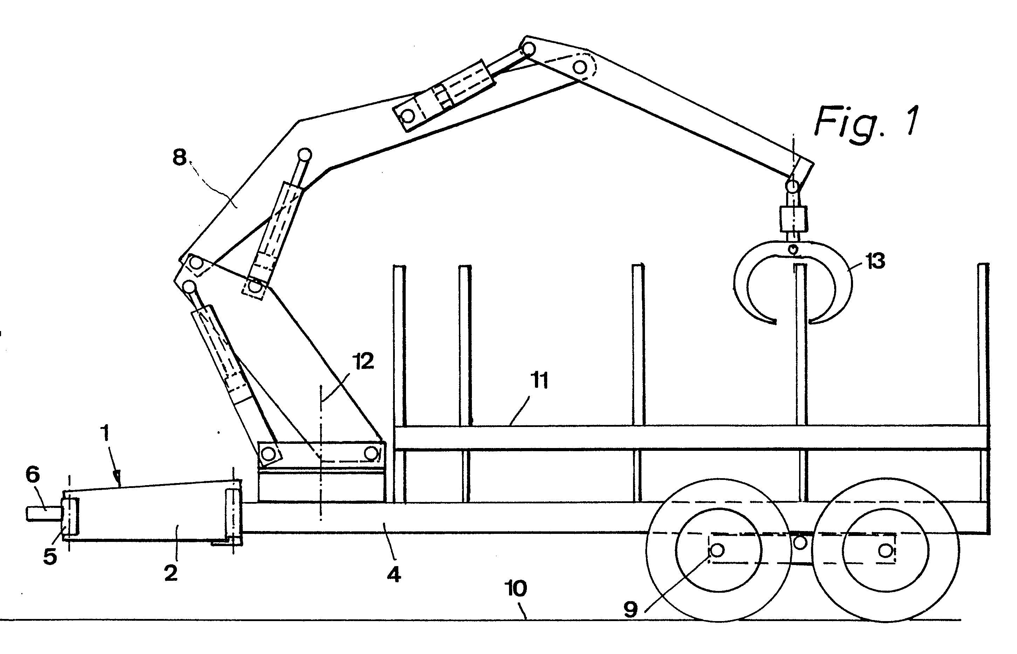

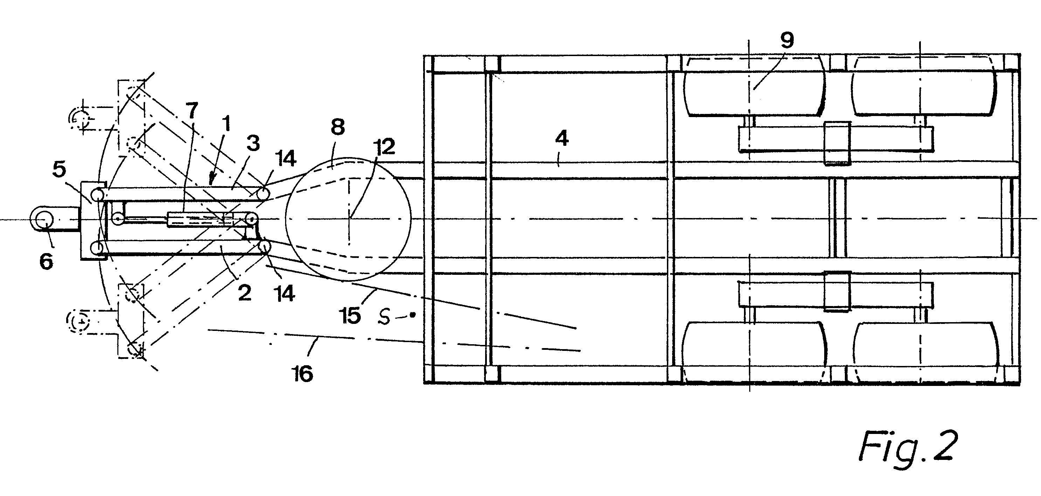

Zwischen den beiden Lenkern 2 und 3, die, wie die Fig. 1 erkennen lässt, ein verhältnismässig hohes Profil aufweisen, ist der Arbeitszylinder 7 angeordnet, und je nach der Beaufschlagung des Arbeitszylinders ist es möglich, die Anhängekupplung nach der einen oder anderen Seite zu verschwenken, wie dies aus den strichpunktierten Linien der Fig. 2 hervorgeht. Wenn die Anhängekupplung 6 dabei mit dem Schleppfahrzeug verbunden ist, ergibt sich sinngemäss eine seitliche Verschiebungsbewegung des vorderen Endes des Fahrzeuganhängers bzw. eine Schwenkbewegung um die Räder der Achse 9.

Befindet sich die Anhängekupplung in der Mittellage, die insbesondere die Fahrstellung sein kann, dann bestimmt die strichpunktierte Linie 15 diejenige Abstützfläche, innerhalb derer sich der Gesamtschwerpunkt bei den Ladearbeiten befinden muss, wenn Kippbewegungen des Anhängers ausgeschlossen sein sollen. Beim Gesamtschwerpunkt wirkt dabei die jeweilige Stellung des Ladegerätes 8 und die Grösse und Lage der Last mit.

Wenn die Anhängekupplung 6 nach der einen Seite verstellt ist, bestimmt die strichpunktierte Linie 16 die Abstützfläche, und es ist deutlich, dass ein seitlich verlagerter Gesamtschwerpunkt S ohne die erfindungsgemässe Ausbildung schon zu einem Kippen des Fahrzeuges, gegebenenfalls zu einem Umstürzen führen würde, während in diesem Falle bei Anwendung der Erfindung eine Ladearbeit noch durchführbar ist.

Da sich gerade bei leerem Fahrzeug der Gesamtschwerpunkt bei Ladearbeiten mehr in der Nähe des Ladegeräts bzw. der Achse 12 des Ladegeräts befinden würde, als beispielsweise bei fast vollbeladenem Fahrzeuganhänger, wirkt sich die erfindungsgemässe Ausbildung gerade in diesem Falle besonders aus und erlaubt noch ein Arbeiten bei beträchtlich seitlich ausgewandertem Gesamtschwerpunkt.

Es ist klar, dass die seitliche Verstellung gemäss der Erfindung jeweils ein Arbeiten auf der entsprechenden Seite des Fahrzeuganhängers zulässt. Da aber eine Verstellbarkeit nach beiden Seiten gegeben ist, behindert diese die Arbeit nicht.

Im gezeigten Ausführungsbeispiel unterstützen die Räder der Achse das Fahrzeug im Bereich des hinteren Teils der Ladefläche. Es ist klar, dass die erfindungsgemässen Wirkungen auch erhalten werden, wenn sich beispielsweise die Achse direkt am rückwärtigen Ende des Fahrzeuges befindet oder auch dann, wenn die Ladefläche im wesentlichen über die Radachse nach hinten übersteht.

**Patentansprüche**

1. Fahrzeuganhänger für Ladearbeiten, insbesondere zum Abtransport von Rundholz aus Wal-

3

dungen, wobei der Fahrzeugrahmen (4) des Anhängers eine Anhängekupplung (6) für ein Schleppfahrzeug aufweist, eine Achsanordnung etwa unter der Ladefläche (11) sowie ein Ladegerät (8) am vorderen Ende der Ladefläche und sich das Ladegerät bei der Ladearbeit über die Anhängekupplung auch auf das Schleppfahrzeug abstützt, und mit einer Vorrichtung zur Verringerung der Kippgefahr während der Ladearbeit, gekennzeichnet durch eine Verstelleinrichtung (1) am Anhänger zur Verstellung der Anhängekupplung (6) gegenüber dem Fahrzeugrahmen (4) des Anhängers horizontal und rechtwinklig zur Fahrtrichtung.

2. Fahrzeuganhänger nach Anspruch 1, dadurch gekennzeichnet, dass die Verstelleinrichtung (1) hydraulisch angetrieben ist.

3. Fahrzeuganhänger nach einem oder beiden der vorhergehenden Ansprüche, dadurch gekennzeichnet, dass die Verstelleinrichtung (1) im wesentlichen aus einem Lenkerparallelogramm besteht, wobei die horizontal angeordneten Lenker (2, 3) mit ihrem einen Ende am Fahrzeugrahmen (4) gelagert und deren andere Enden durch ein Querstück (5) verbunden sind, das die Anhängekupplung (6) trägt.

4. Fahrzeuganhänger nach einem oder mehreren der vorhergehenden Ansprüche, dadurch gekennzeichnet, dass der Arbeitszylinder (7) für die Verstelleinrichtung (1) zwischen den Lenkern (2, 3) des Lenkparallelogramms angeordnet ist.

5. Fahrzeuganhänger nach einem oder mehreren der vorhergehenden Ansprüche, dadurch gekennzeichnet, dass die Verstelleinrichtung (1) insbesondere das Lenkerparallelogramm unter dem Ladegerät (8) angeordnet ist.

**Claims**

1. Vehicle trailer for loading, in particular for transporting of round timber out of forests, whereby the chassis (4) of the trailer has a coupling (6) for a tractor, an arrangement of axis about under the loading area (11) and a loading device (8) at the front end of the loading area and whereby the loading device during the loading bases by means of the coupling also on the tractor, and with an arrangement for reducing the risk of tipping during loading, characterised by a device for adjustment on the trailer for the adjustment of the coupling (6) in relation to the chassis (4) of the trailer horizontally and right-angled to the direction of motion.

2. Vehicle trailer according to claim 1 characterised in that the device for adjustment (1) is driven hydraulically.

3. Vehicle trailer according to one or both of the preceding claims, characterised in that the device for adjustment (1) essentially consists in a guiding parallelogram, whereby the horizontally arranged guide rods (2, 3) with its one end are mounted at the chassis (4) and its other end are connected by means of a transverse part (5), which carries the coupling (6) for tractor.

4. Vehicle trailer according to one or more of the preceding claims, characterised in that the working cylinder (7) for the device of adjustment is arranged between the guide rods (2, 3) of the guiding parallelogram.

5. Vehicle trailer according to one or more of the preceding claims, characterised in that the device for adjustment (1), in particular the guiding parallelogram is arranged under the loading device (8).

**Revendications**

1. Remorque de véhicule pour des opérations de chargement, notamment pour sortir des grumes de zones forestières, dans laquelle le châssis (4) de la remorque comporte un attelage (6) pour un véhicule tracteur, un agencement d'essieu sensiblement sous la surface de chargement (11) ainsi qu'un engin de chargement (8) à l'extrémité antérieure de la surface de chargement, l'engin de chargement s'appuyant également sur le véhicule tracteur par l'intermédiaire de l'attelage, lors de l'opération de chargement, et un dispositif pour réduire le risque de basculement pendant l'opération de chargement, caractérisée par un dispositif de réglage (1) sur la remorque pour déplacer l'attelage (6) par rapport au châssis (4) de la remorque horizontalement et angulairement par rapport au sens de la marche.

2. Remorque de véhicule selon la revendication 1, caractérisée en ce que le dispositif de réglage (1) est actionné hydrauliquement.

3. Remorque de véhicule selon l'une ou les deux revendications précédentes, caractérisée en ce que le dispositif de réglage (1) est constitué essentiellement par un parallélogramme articulé dans lequel les bras disposés horizontalement (2, 3) sont montés par une de leurs extrémités sur le châssis (4) et leurs autres extrémités sont reliées par une pièce transversale (5) qui porte l'attelage de la remorque (6).

4. Remorque de véhicule selon l'une ou plusieurs des revendications précédentes, caractérisée en ce que le vérin de travail (7) pour le dispositif de réglage (1) est disposé entre les bras (2, 3) du parallélogramme articulé.

5. Remorque de véhicule selon l'une ou plusieurs des revendications précédentes, caractérisée en ce que le dispositif de réglage (1), notamment le parallélogramme articulé, est disposé sous l'engin de chargement (8).

Fig. 1

Fig. 2